# EUROPEAN PATENT SPECIFICATION

(11) **EP 1 734 108 B1**
(45) Date of publication and mention of the grant of the patent: **23.03.2016**
(21) Application number: 06113723.8
(22) Date of filing: 09.05.2006
(51) Int. Cl.: C12G 1/02, A23L 2/08

(54) **Process for producing sugar products from grapes**
Prozess zur Produktion von Zuckerprodukten aus Trauben
Procédé pour la fabrication de produits sucrés à partir de raisins

(30) Priority: 13.06.2005 IT MI20051103
(43) Date of publication of application: 20.12.2006
(73) Proprietor: NATURALIA INGREDIENTS S.r.l, Mazara del Vallo (TP) (IT)
(72) Inventor: Foraci, Fabio, 91026, MAZARA DEL VALLO (TP) (IT)
(74) Representative: Giannini, Manuela

(56) References cited:
- EP-A- 0 609 279
- EP-A- 0 910 448
- EP-A- 1 096 006
- DE-A1- 2 532 325
- GB-A- 1 492 992
- IT-A1- RM 990 662
- US-A- 3 416 961
- US-A- 4 443 267
- US-B1- 6 325 940

## Description

The present invention relates to a process for producing sugar products from grapes.

In particular, the patent relates to a process for producing rectified concentrated must or rectified concentrated juice in crystalline or powder form.

Grapes are known to internally contain sugars, in particular glucose and fructose.

It has long been known to extract from grapes an aqueous mixture formed from water, fructose and glucose, and known as rectified concentrated must.

It is also known to process this mixture to form rectified concentrated must in crystalline or powder form.

In particular, Italian patent application RM99A000662 describes a process in which the liquid rectified concentrated must is initially concentrated to a concentration of 82° brix and then mixed with neutral 96° ethyl alcohol, in the proportion of 1:1 (i.e. 50% ethyl alcohol and 50% liquid rectified concentrated must).

The mixture of ethyl alcohol and liquid rectified concentrated must is stirred to enable the ethyl alcohol to extract the water contained within the sugars.

This operation results in separation into a lower layer of pasty grape sugar and an upper layer of ethyl alcohol and water.

The mixture of water and ethyl alcohol is then removed and distilled (to recover the ethyl alcohol) while the pasty matter is kept for at least 15 days at a temperature of -5/6°C for crystal formation.

After the time required for crystal formation (at least 15 days) the crystals are centrifuged, washed and maintained in a dryer to obtain the final product. The final product obtained does not present a true crystalline or powder structure, but instead is in the form of a gelatinous mass, consisting of: glucose and fructose sugars (and other minimal quantities of substances present in the grape defined as "non-sugar"), ethyl alcohol and water.

In this respect, the ethyl alcohol removes only part of the water, the final drying not being able to eliminate the remainder of the water, which therefore remains incorporated in the interior of the gelatinous mass without being able to emerge from it.

The gelatinous mass is also unstable in air and difficult to work.

Another drawback is the high cost of the ethyl alcohol, both at the purchase stage and in its recovery; this evidently affects the cost of the final product.

The crystal maturing time is very lengthy and usually varies considerably depending on the particular conditions under which it takes place, this leading to difficult industrialization of the process.

In addition, crystal washing inevitably modifies the fructose/glucose weight ratio because of the greater water solubility of fructose compared with glucose.

To rebalance this ratio an attempt has been made to enrich the starting solution concentrated to 82° brix with the fructose recovered from the wash water and reconcentrated.

However the finished product obtained is unsatisfactory in terms of its dryness, taste and smell.

US 4 443 267 discloses a plant for separating fructose from glucose in mixture containing both sugars wherein the separation is carried out with anion-exchange resins in bisulfite form in a 3-column-system which is fed continuously from bottom to top.

The technical aim of the present invention is therefore to provide a process for producing sugar products from grapes by which the technical drawbacks of the known art are eliminated.

Within the scope of this technical aim, an object of the invention is to provide a process which enables a crystalline or powder product to be obtained rather than a gelatinous mass.

In particular, the process of the present invention enables the water to be removed from the gelatinous mass very efficiently.

Another object of the invention is to provide a process enabling a finished product to be obtained which is stable in air and easily worked.

A further object of the invention is to provide a process which does not require the use of ethyl alcohol, in this manner enabling the costs associated therewith to be substantially reduced. Another object of the invention is to provide a process which can be easily industrialized.

A further object of the invention is to provide a process enabling a finished product to be obtained which presents satisfactory characteristics in terms of dryness, taste and smell.

The technical aim, together with these and further objects, are attained, according to the invention, by a process for producing sugar products from grapes in accordance with the accompanying claims.

Further characteristics and advantages of the invention will be more apparent from the description of a preferred but non-exclusive embodiment of the process for producing sugar products from grapes according to the invention, illustrated by way of non-limiting example in the accompanying drawings, in which:

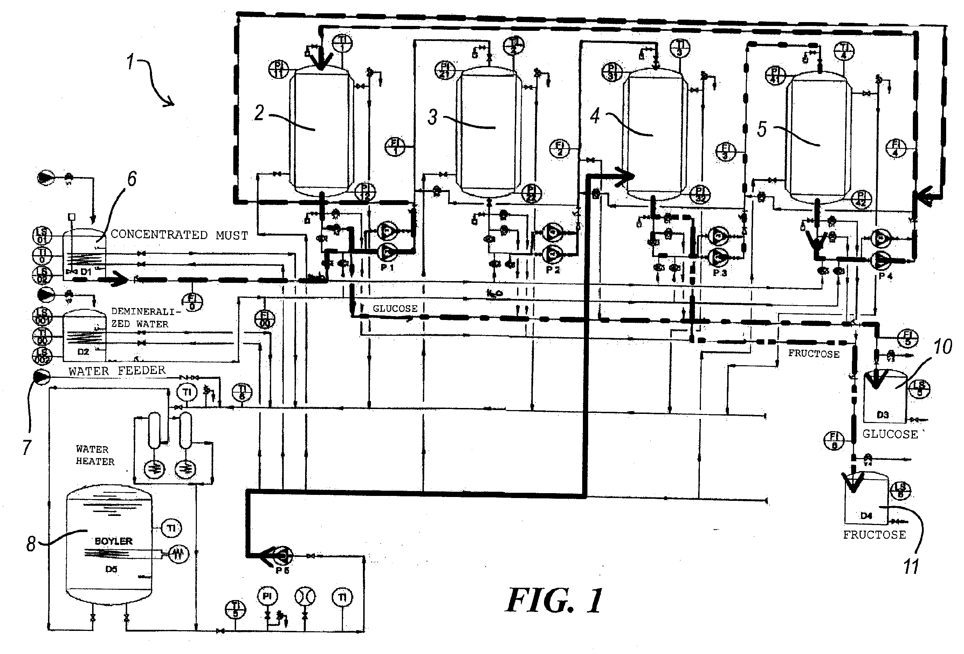

Figures 1-4 show a plant suitable for the process according to the invention in four different stages of operation.

Said figures show a plant for producing sugar products from grape, indicated overall by the reference numeral 1.

The plant 1 comprises a plurality of columns 2, 3, 4, 5, connected together in series, each of the columns 2, 3, 4, 5 implementing in succession all the steps of the chromatographic process, but implementing steps of the process which are different from the other columns 2, 3, 4, 5.

Hence in practice, when one of the columns (for example the column 2) is in a predetermined stage of the chromatographic process, column 3 is in a different stage, column 4 in a still different stage, and column 4 in a further stage different from all the preceding stages.

Each column opportunely effects all the steps of the chromatographic process, a recirculation step being provided for passing from one step to the next.

Specifically, as shown in the figures, the plant comprises four columns which implement a glucose concentration step, a glucose stripping step, a fructose enrichment step and a fructose concentration step.

In addition to the columns, the plant is provided with connection lines, a concentration must tank 6, a make-up water feeder 7 and a water heater 8 for heating the water to a predetermined temperature for the process.

The plant is also provided with a glucose accumulation tank 10 and a fructose accumulation tank 11.

The plant operation is evident from that described and illustrated, and is substantially the following.

In Figure 1, column 2 is shown in the absorption stage (for concentrating the glucose) and is fed with a fraction rich in glucose and fructose originating from column 5 (as indicated by the dashed line).

A glucose-rich fraction is withdrawn from the bottom of column 2 and is fed to the glucose tank 10 (dashed and dotted line).

Column 3 is in the purification stage (to implement glucose stripping), and is at rest, without feed or discharge.

Column 4 is in the desorption stage (i.e. fructose enrichment), and is fed with water (full line), which is used to displace the glucose fraction contained in it (column 4).

The fructose fraction is withdrawn from the bottom of column 4 and is fed to the tank 11 (dashed and double dotted line); however not all the fructose is withdrawn, hence part of the fructose is fed to the next column 5 (circled line).

Column 5 is in the concentration stage (the fructose is concentrated therein), in which it (column 5) is fed with the residual fraction of column 4 still rich in fructose (circled line), its bottoms, together with fresh must, being fed to column 1 (dashed line).

This configuration is maintained by the plant for 6 minutes and 30 seconds (six and a half minutes).

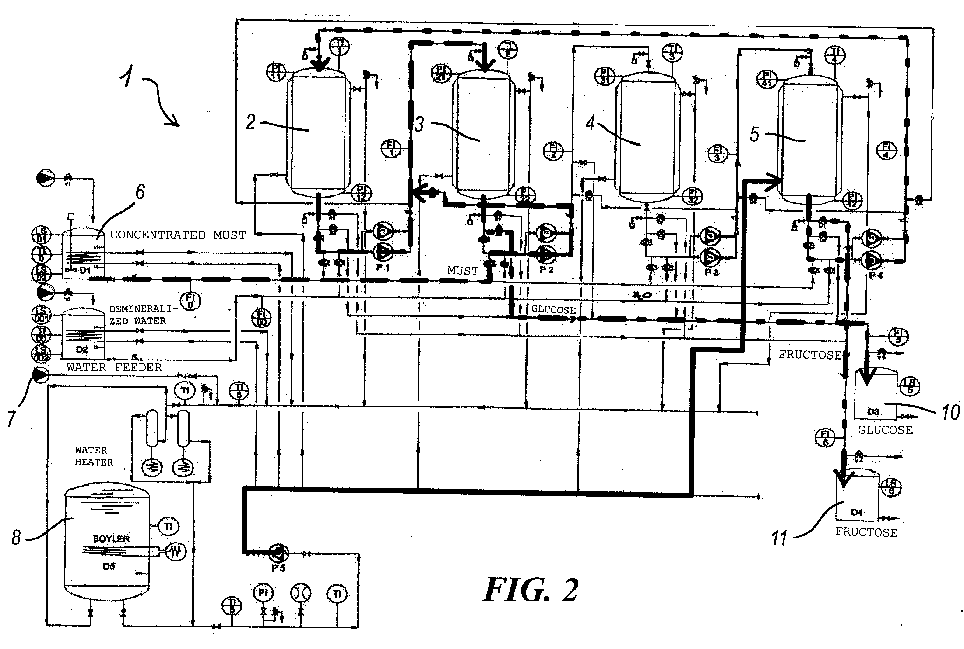

After a recirculation step of 19 minutes, the plant then assumes the configuration of Figure 2.

In this configuration, column 2 is in the concentration stage, it (column 2) being fed with the residual fraction from column 5 still rich in fructose (circled line), the bottoms from this column, together with fresh must, being fed to column 3 (dashed line).

Column 3 is in the absorption stage, in which it is fed with the fraction rich in glucose and fructose originating from column 2 and with concentrated must (dashed line); a glucose-rich fraction is withdrawn from the bottom of column 3 and fed to the tank (dashed and dotted line).

Column 4 is in the purification stage and is a rest, without feed or discharge.

Column 5 is in the desorption stage, and is fed with water (to displace the fructose fraction contained in it, full line), the fructose fraction being withdrawn from its bottom and fed to the tank 11 (dashed and double dotted line), the unextracted fructose being fed to column 2 (circled line).

This configuration is maintained by the plant for 6 minutes and 30 seconds (six and a half minutes).

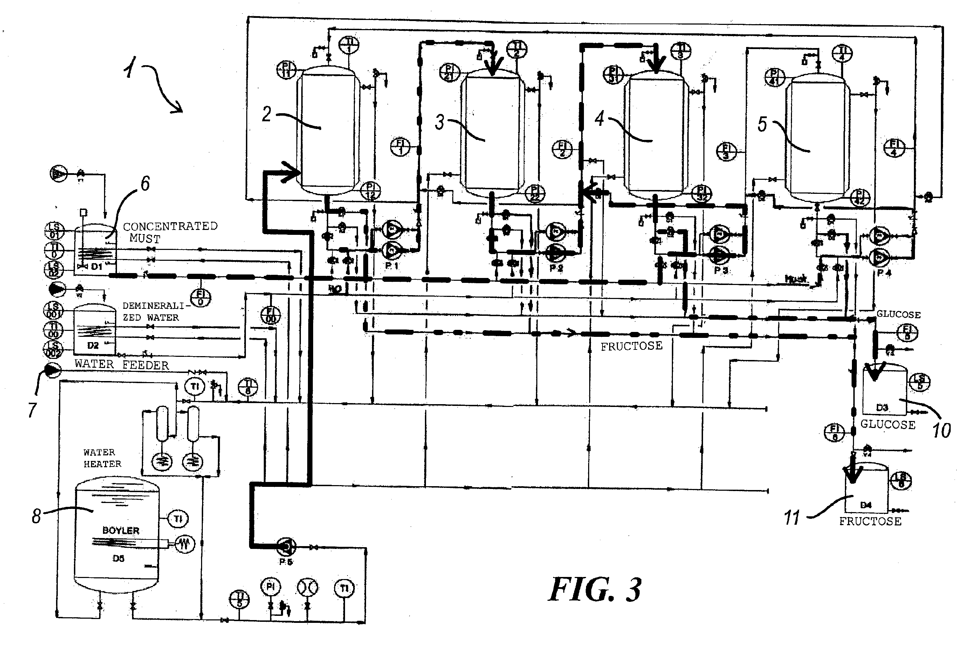

After a recirculation step of 19 minutes, the plant then assumes the configuration of Figure 3,.

Column 2 is in the desorption stage, and is fed with water (to displace the fructose fraction contained in it, full line), the fructose fraction being withdrawn from its bottom and fed to the tank 11 (dashed and double dotted line), the unextracted fructose being fed to column 3 (circled line).

Column 3 is in the concentration stage, in which it (column 3) is fed with the residual fraction of column 2 still rich in fructose (circled line), its bottoms, together with fresh must, being fed to column 4 (dashed line).

Column 4 is in the absorption stage, in which it is fed with the fraction rich in glucose and fructose originating from column 3 and with concentrated must (dashed line); a glucose-rich fraction is withdrawn from the bottom of column 4 and fed to the tank (dashed and dotted line).

Column 5 is in the purification stage and is a rest, without feed or discharge.

This configuration is maintained by the plant for 6 minutes and 30 seconds (six and a half minutes).

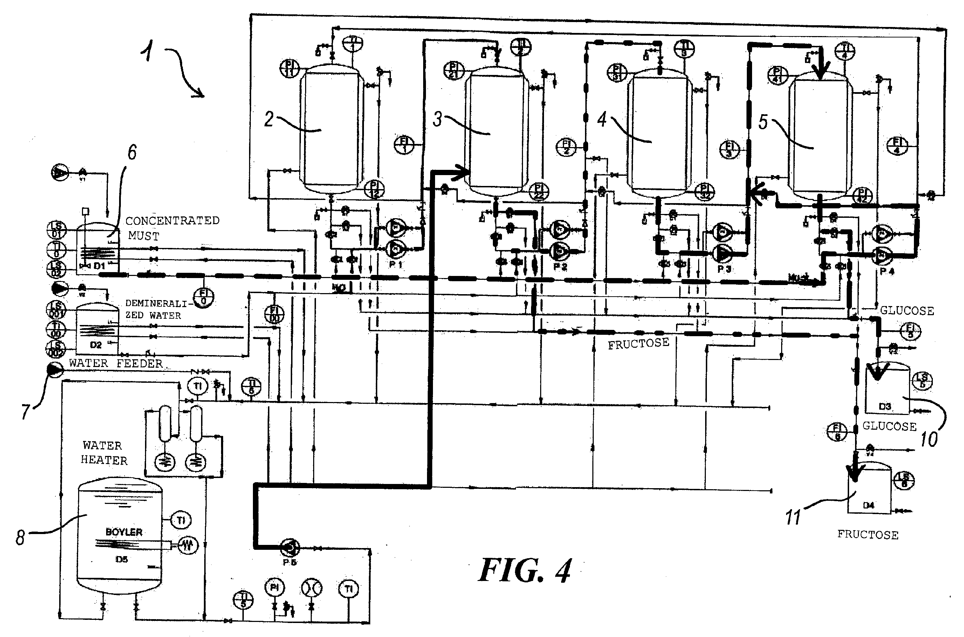

After a recirculation step of 19 minutes, the plant then assumes the configuration of Figure 4.

Column 2 is in the purification stage and is a rest, without feed or discharge.

Column 3 is in the desorption stage, and is fed with water (to displace the fructose fraction contained in it, full line), the fructose fraction being withdrawn from its bottom and fed to the tank 11 (dashed and double dotted line), the unextracted fructose being fed to column 4 (circled line).

Column 4 is in the concentration stage, in which it is fed with the residual fraction of column 3 still rich in fructose (circled line), the bottoms of column 4, together with fresh must, being fed to column 5 (dashed line).

Column 5 is in the absorption stage, in which it is fed with the fraction rich in glucose and fructose originating from column 4 and with concentrated must (dashed line); a glucose-rich fraction is withdrawn from the bottom of column 5 and fed to the tank (dashed and dotted line).

This configuration is maintained by the plant for 6 minutes and 30 seconds (six and a half minutes).

After a further recirculation step of 19 minutes, the plant again assumes the configuration of Figure 1.

The described plant implements a process for producing sugar products from grapes.

The process consists of treating a solution of liquid rectified concentrated must by chromatography, to separate at least one sugar contained in it and is characterized by the features according to independent claim 1.

The liquid rectified concentrated must used for separating the sugars has a concentration of 65° brix before treatment, i.e. before being fed to the columns 2-4.

The separated sugars comprise a liquid solution of glucose and a liquid solution of fructose.

At least one of these obtained sugars is then separated from the liquid solution containing it, this separation being achieved by crystallization in the metastable region of the treated liquid solution (i.e. of the glucose and/or fructose liquid solution).

The fructose crystallization comprises the steps of concentrating the liquid solution of fructose, possible seeding with fructose crystals (to limit crystallization time), cooling, fructose crystal growth, and crystal separation from the liquid solution.

Advantageously, during the concentration step the liquid solution is brought to a concentration of 80-84° brix.

Any subsequent seeding is carried out by adding fructose crystals of less than 0.15 millimetre in size to the liquid solution in a quantity of 0.95-5.00 wt%.

Cooling is carried out by cooling the liquid solution to a temperature of 10-15°C, separation being by centrifuge.

For example the fructose solution is brought to 82° brix at a temperature of 12°C, and seeding is carried out with 1% of crystals.

Drying of the crystals obtained (in a static dryer under vacuum) presented no difficulty, the crystals being stable at ambient temperature under humidity conditions of near or greater than 60%.

The glucose separation comprises the steps of concentrating the liquid solution of glucose, cooling and granulating the glucose, and drying the glucose.

The concentration of the liquid solution of glucose is brought suitably to 68-82° brix, and preferably to 70-74° brix.

Cooling is carried out to a temperature of 10-15°C and preferably to 11-13°C, granulation being simultaneous with cooling.

Advantageously, the mixture is stirred during cooling, granulation and drying under vacuum.

For example, the glucose mixture has been concentrated to 72° brix and then brought to a temperature of 12°C.

The glucose obtained in this manner does not present a crystalline structure, is easily dried in a static dryer and has the form of a powder.

Finally, the glucose separated from its liquid mixture and the fructose separated from its liquid mixture are advantageously mixed together to form the rectified concentrated must in crystalline or powder form.

It has been found in practice that the process for producing sugar products from grapes according to the invention is particularly advantageous, because it enables rectified concentrated must to be obtained in crystalline or powder form of very high quality.

## Claims

1. A process for producing sugar products from grapes by treating a solution by chromatography, to separate a liquid solution of glucose and a liquid solution of fructose, **characterised in that**:
- the solution is a solution of liquid rectified concentrated must;
- it is used a plant comprising a plurality of columns connected together in series, each column implementing in succession all the steps of the chromatographic process, but implementing steps of the process which are different from the other columns, a recirculation step being provided in passing from one step to the next;
- at least one of the obtained sugars is separated from the liquid solution containing it; and
- a crystalline or powder product is obtained.

2. A process as claimed in claim 1, **characterised in that** the liquid rectified concentrated must used for separating the sugars has a concentration of 65° brix.

3. A process as claimed in the preceding claim, **characterised in that** the separation is carried out by crystallization within the metastable region of the treated liquid solution.

4. A process as claimed in one of the preceding claims, **characterised in that** crystallization of the fructose comprises the steps of concentrating the liquid solution of fructose, cooling, fructose crystal growth, and crystal separation from the liquid solution.

5. A process as claimed in claim 4, **characterised by** comprising a step of seeding with fructose crystals between the concentration step and the cooling step.

6. A process as claimed in claim 4 or 5, **characterised in that** in the concentration step, the liquid solution is brought to a concentration of 80-84° brix.

7. A process as claimed in one or more of claims 5 onwards, **characterised in that** seeding is carried out by adding fructose crystals to the liquid solution in a quantity of 0.95-5 wt%.

8. A process as claimed in one or more of claims 5 onwards, **characterised in that** seeding is carried out by adding to the liquid solution fructose crystals of less than 0.15 millimetre in size.

9. A process as claimed in one or more of claims 4 onwards, **characterised in that** cooling is carried out by cooling the liquid solution to a temperature of 10-15°C.

10. A process as claimed in one or more of claims 4 onwards, **characterised in that** the separation is of centrifugal type.

11. A process as claimed in one of the preceding claims, **characterised in that** the glucose separation comprises the steps of concentrating the liquid solution of glucose, cooling and granulating the glucose, and drying the glucose.

12. A process as claimed in the preceding claim, **characterised in that** in the concentration step, the liquid solution of glucose is brought to a concentration of 68-82°brix, and preferably to a concentration of 70-74° brix.

13. A process as claimed in one or more of claims 11 onwards, **characterised in that** cooling is carried out to a temperature of 10-15°C and preferably to 11-13°C.

14. A process as claimed in one or more of claims 11 onwards, **characterised in that** granulation is simultaneous with cooling.

15. A process as claimed in one or more of claims 11 onwards, **characterised by** stirring the mixture during cooling and granulation.

16. A process as claimed in one or more of claims 11 onwards, **characterised in that** drying takes place under vacuum.

17. A process as claimed in one or more of the preceding claims, **characterised by** mixing together the glucose separated from its liquid mixture and the fructose separated from its liquid mixture.

## Patentansprüche

1. Verfahren zur Herstellung von Zuckerprodukten aus Trauben durch das Behandeln einer Lösung mittels Chromatographie, um eine flüssige Glucoselösung und eine flüssige Fructoselösung zu trennen, **dadurch gekennzeichnet, dass**:
- die Lösung eine Lösung flüssigen rektifizierten konzentrierten Mostes ist;
- es in einer Anlage verwendet wird, die mehrere Säulen umfasst, die in Serie miteinander verbunden sind, wobei jede Säule hintereinander all die Schritte des Chromatographieverfahrens implementiert, jedoch Schritte des Verfahrens implementiert, die sich von den anderen Säulen unterscheiden, wobei ein Rezirkulationsschritt im Übergehen von einem Schritt zum Nächsten zur Verfügung gestellt wird;
- wenigstens einer der erhaltenen Zucker von der flüssigen Lösung, die sie enthält, getrennt wird; und
- ein kristallines oder Pulverprodukt erhalten wird.

2. Verfahren nach Anspruch 1, **dadurch gekennzeichnet, dass** der rektifizierte konzentrierte Most, der zur Trennung der Zucker verwendet wird, eine Konzentration von 65°Brix aufweist.

3. Verfahren nach einem der vorangehenden Ansprüche, **dadurch gekennzeichnet, dass** die Trennung durch die Kristallisierung innerhalb des metastabilen Bereiches der behandelten flüssigen Lösung durchgeführt wird.

4. Verfahren nach einem der vorangehenden Ansprüche, **dadurch gekennzeichnet, dass** die Kristallisierung der Fruktose die Schritte des Konzentrierens der flüssigen Fructoselösung, des Kühlens, des Fructosekristallwachstums, und der Kristalltrennung von der flüssigen Lösung umfasst.

5. Verfahren nach Anspruch 4, **dadurch gekennzeichnet, dass** es zwischen dem Konzentrationsschritt und dem Kühlungsschritt einen Schritt des Beimpfens mit Fructosekristallen umfasst.

6. Verfahren nach Anspruch 4 oder 5, **dadurch gekennzeichnet, dass** im Konzentrationsschritt die flüssige Lösung auf eine Konzentration von 80-84° Brix gebracht wird.

7. Verfahren nach einem oder mehreren der Ansprüche ab Anspruch 5, **dadurch gekennzeichnet, dass** die Beimpfung durch das Hinzufügen von Fructosekristallen zur flüssigen Lösung in einer Menge von 0,95-5 Gew.-% durchgeführt wird.

8. Verfahren nach einem oder mehreren der Ansprüche ab Anspruch 5, **dadurch gekennzeichnet, dass** die Beimpfung durch das Hinzufügen von Fructosekristallen mit einer Größe von weniger als 0,15 Millimetern zur flüssigen Lösung durchgeführt wird.

9. Verfahren nach einem oder mehreren der Ansprüche ab Anspruch 4, **dadurch gekennzeichnet, dass** das Kühlen durch das Kühlen der flüssigen Lösung auf eine Temperatur von 10-15°C durchgeführt wird.

10. Verfahren nach einem oder mehreren der Ansprüche ab Anspruch 4, **dadurch gekennzeichnet, dass** die Trennung vom Zentrifugaltyp ist.

11. Verfahren nach einem der vorangehenden Ansprüche, **dadurch gekennzeichnet, dass** die Glucosetrennung die Schritte des Konzentrierens der flüssigen Glucoselösung, des Kühlens und der Granulierung der Glucose und des Trocknens der Glucose umfasst.

12. Verfahren nach dem vorangehenden Anspruch, **dadurch gekennzeichnet, dass** im Konzentrationsschritt die flüssige Glucoselösung auf eine Konzentration von 68-82° Brix gebracht wird, und bevorzugt auf eine Konzentration von 70-74° Brix.

13. Verfahren nach einem oder mehreren der Ansprüche ab Anspruch 11, **dadurch gekennzeichnet, dass** es bei einer Temperatur von 10-15°C durchgeführt wird, bevorzugt bei 11-13°C.

14. Verfahren nach einem oder mehreren der Ansprüche ab Anspruch 11, **dadurch gekennzeichnet, dass** die Granulierung gleichzeitig mit dem Kühlen stattfindet.

15. Verfahren nach einem oder mehreren der Ansprüche ab Anspruch 11, **dadurch gekennzeichnet, dass** die Mischung während der Kühlung und Granulierung gerührt wird.

16. Verfahren nach einem oder mehreren der Ansprüche ab Anspruch 11, **dadurch gekennzeichnet, dass** das Trocknen unter Vakuum stattfindet.

17. Verfahren nach einem oder mehreren der vorangehenden Ansprüche, **gekennzeichnet durch** das Vermischen der Glucose, die von ihrer flüssigen Mischung getrennt wurde, und der Fructose, die von ihrer flüssigen Mischung getrennt wurde.

## Revendications

1. Procédé pour produire des produits sucrés à partir de raisins en traitant une solution par chromatographie, pour séparer une solution liquide de glucose et une solution liquide de fructose, **caractérisé en ce que** :
- la solution est une solution de moût concentré rectifié liquide ;
- on utilise une installation comprenant une pluralité de colonnes raccordées ensemble en série, chaque colonne mettant en oeuvre en succession toutes les étapes du procédé chromatographique, mais mettant en oeuvre les étapes du procédé qui sont différentes des autres colonnes, une étape de recirculation étant prévue en passant d'une étape à la suivante ;
- au moins l'un des sucres obtenus est séparé de la solution liquide le contenant ; et
- on obtient un produit cristallin ou en poudre.

2. Procédé selon la revendication 1, **caractérisé en ce que** le moût concentré rectifié liquide utilisé pour séparer les sucres a une concentration de 65° brix.

3. Procédé selon la revendication précédente, **caractérisé en ce que** la séparation est obtenue par la cristallisation dans la région métastable de la solution liquide traitée.

4. Procédé selon l'une des revendications précédentes, **caractérisé en ce que** la cristallisation du fructose comprend les étapes de concentration de la solution liquide de fructose, de refroidissement, de croissance des cristaux de fructose, et de séparation des cristaux de la solution liquide.

5. Procédé selon la revendication 4, **caractérisé en ce qu'**il comprend une étape d'ensemencement avec des cristaux de fructose entre l'étape de concentration et l'étape de refroidissement.

6. Procédé selon la revendication 4 ou 5, **caractérisé en ce que**, à l'étape de concentration, la solution liquide est amenée à une concentration de 80-84° brix.

7. Procédé selon une ou plusieurs des revendications 5 et suivantes, **caractérisé en ce que** l'ensemencement est réalisé en ajoutant des cristaux de fructose à la solution liquide selon une quantité de 0,95-5 % en poids.

8. Procédé selon une ou plusieurs des revendications 5 et suivantes, **caractérisé en ce que** l'ensemencement est réalisé en ajoutant à la solution liquide, des cristaux de fructose ayant une taille inférieure à 0,15 millimètre.

9. Procédé selon une ou plusieurs des revendications 4 et suivantes, **caractérisé en ce que** le refroidissement est réalisé en refroidissant la solution liquide à une température de 10-15 °C.

10. Procédé selon une ou plusieurs des revendications 4 et suivantes, **caractérisé en ce que** la séparation est du type centrifuge.

11. Procédé selon l'une des revendications précédentes, **caractérisé en ce que** la séparation du glucose comprend les étapes de concentration de la solution liquide de glucose, de refroidissement et de granulation du glucose et de séchage du glucose.

12. Procédé selon la revendication précédente, **caractérisé en ce que**, à l'étape de concentration, la solution liquide de glucose est amenée à une concentration de 68-82° brix et de préférence à une concentration de 70-74° brix.

13. Procédé selon une ou plusieurs des revendications 11 et suivantes, **caractérisé en ce que** le refroidissement est réalisé à une température de 10-15 °C et de préférence de 11-13 °C.

14. Procédé selon une ou plusieurs des revendications 11 et suivantes, **caractérisé en ce que** la granulation est réalisée simultanément au refroidissement.

15. Procédé selon une ou plusieurs des revendications 11 et suivantes, **caractérisé par** l'étape consistant à remuer le mélange pendant le refroidissement et la granulation.

16. Procédé selon une ou plusieurs des revendications 11 et suivantes, **caractérisé en ce que** le séchage a lieu sous vide.

17. Procédé selon une ou plusieurs des revendications précédentes, **caractérisé par** le fait de mélanger le glucose séparé de son mélange liquide et le fructose séparé de son mélange liquide.
